# EUROPEAN PATENT APPLICATION

(11) **EP 0 525 223 A1**
(43) Date of publication of application: **03.02.1993**
(21) Application number: 91112384.2
(22) Date of filing: 24.07.1991
(51) Int. Cl.: B60J 5/04

(54) **Side intrusion beam**

(71) Applicant: GENERAL ELECTRIC COMPANY, Schenectady, N.Y. 12151 (US)
(72) Inventor: Bradbury, Lawrence Raymond, NL-4600 AC Bergen op Zoom (NL)
(74) Representative: Pratt, Richard Wilson

(57) **Abstract**

5 The invention relates to a reinforcing profile, which has been manufactured from a beam made (3) from fibre reinforced plastic and a woven belt (4) extending in the longitudinal direction of said beam and being combined with said beam. The beam could be combined with at least two belts extending substantially parallel to each other. Preferably the belt(s) has been embedded in the reinforced plastic of the beam. A preferred material for manufacturing the beam is high modulus fibre reinforced plastic. The woven belt could be formed by belt material used for car seat belts.

## Description

The invention relates to a reinforcing profile designed for reinforcing plate shaped members and the like, more especially plate shaped members of a car, like a side door of a car for protecting the occupant of the car in a side crash or the like.

Up till now for such purposes there are used systems with steal beams. Such systems with steal beams are generally satisfactory, however a disadvantage of such a known system could be the weight and/or the costs of manufacturing.

Now according the invention the reinforcing profile has been manufactured from a beam made from fibre reinforced plastic and a woven belt extending in the longitudinal direction of said beam and being combined with said beam.

It has been shown, that a reinforcing profile according the invention could show similar performances as the current steal beams, but with the benefits of reduced weight, simple assembly, low costs manufacturing and a reduction in overall system costs.

Preferably the belt has been embedded in the reinforced plastic of the beam as thereby the belt is protected against damage and the profile is easily to handle.

The invention will be further explained with reference to the enclosed drawings wherein:
Figure 1 shows in outline a side view of a side door of a car.
Figure 2 shows in outline a side view on a reinforcing profile on a greater scale.
Figure 3 shows a cross section over figure 2 according line III-III in figure 2 on a greater scale.
Figure 4 shows a possibility for fixing a belt to a bracket.
Figure 5 shows a side view of figure 4.

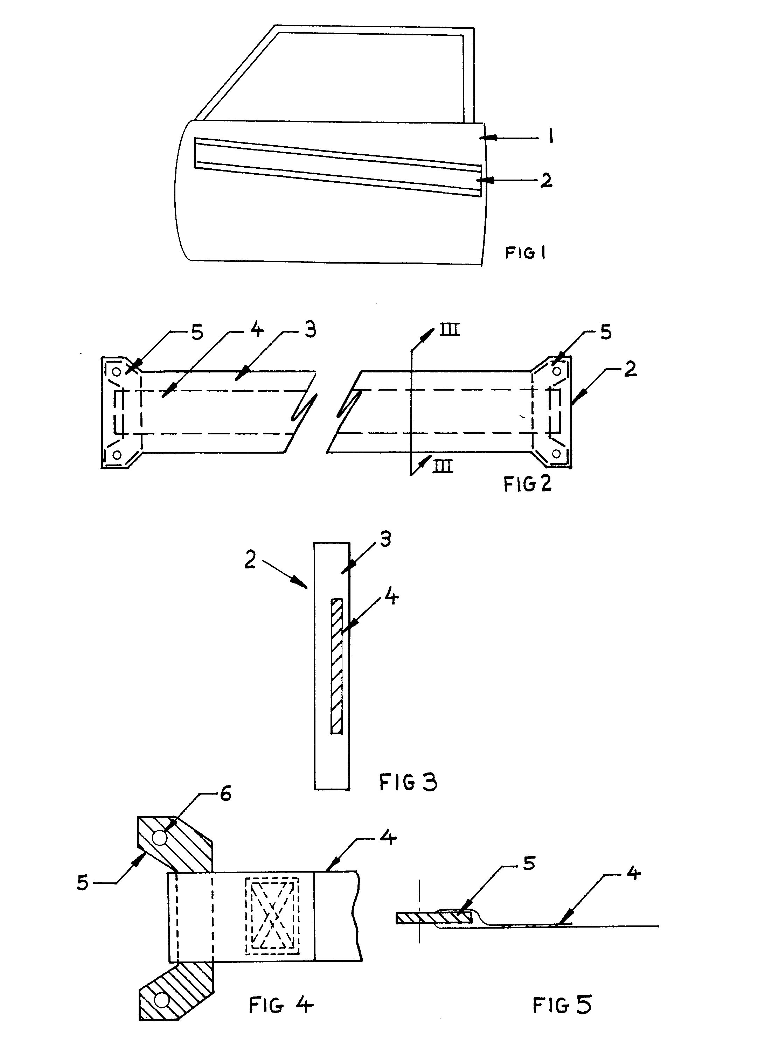

Figure 1 shows in outline a side door 1 of a car (not shown).

In order to give protection to the occupant of the car in the case of a side crash there could be mounted a reinforcing profile 2 on the inside of the door 1. Generally the profile 2 is assembled to structural supports, in the case of a side door typically the pillars at the front and rear of the door, e.g. via the hinges and lock mechanism.

According the invention such a reinforcing profile 2 could be made as shown in figures 2 and 3.

As shown in said figures the reinforcing profile 2 comprises of a fibre reinforced plastic beam 3 wherein in the embodiment shown in the figures there has been embedded a belt 4 in such a way, that the belt 4 is completely surrounded by the material of the fibre reinforced beam 3.

The beam 3 is preferably a fibre reinforced thermoplastic beam made from a resin like polypropylene resin combined with unidirectional glass fibres, e.g. about 40% glass by volume. However thermoset or alternative thermoplastic resins could be used in place of the polypropylene with about the same results. For reinforcement of the resin structure there could be used e.g. also aramide or carbon fibres.

The belt 4 is preferably a thermoplastic woven fibre belt e.g. a belt made from polyester fibres; it has been shown, that a favourable belt material is the belt material from which the generally known car seat belts are made. As said belt material is generally available the use of said material will contribute to a low cost manufacturing.

As shown in figures 4 and 5 the ends of the belt 4 can be folded and stitched, whereby in the so formed loops there can be accomodated brackets 5, e.g. made from steel or the like material.

For manufacturing the reinforcing profile 2 a sub-assembly consisting of two mounting brackets 5 and the belt 4 can be sandwiched between to preheated resin layers whereafter said resin layers and belt can be formed in the reinforcing profile 2 shown in figures 2 and 3 by using a known compression moulding technique.

For mounting the reinforcing profile to structural supports of e.g. the door 1 there could be used the brackets 5, which have been provided with holes 6 for accomodating bolts or the like. It will be clear, that said bolts extend also through the beam 3. When the reinforcing profile receives an impact, e.g. when mounted in a side door of a car at the occurence of a side crash, the fibre reinforced plastic beam 3 will offer the initial resistance, providing high peak loads and low intrusion.

However when the beam 3 reaches it maximum elongation it will break and then the woven belt 4 will operate by transfering the impact load to the structural supports to which the belt 4 has been fixed by means of the brackets 5.

In order to improve the resistance of the beam 3 to bending there could be used eventually a more complex shape of the beam than shown in figure 3. e.g. a beam having a top-hat section whereby in case of an impact the initial intrusion performance will be raised.

It has been shown, that also a good performance of the reinforcing profile 2 could be obtained, if the belt 4 has not been embedded in the reinforced plastic of the beam 3, however when the belt 4 extends along the outside of the beam 3 along said beam 3 whereby there is no mechanical connection between the belt 3 and the beam 4 other than the connection made at the mounting points of the profile 2.

Also it is possible to use two or more belts, e.g. one belt 4 on each side of the beam 3 or various belts embedded in the reinforced plastic of the beam 3.

In the above there has been described the use of a reinforcing profile in the side door of a car. However it will be clear, that a reinforcing profile according the invention could be used also in other cases where impact forces need to be transferred or dissipated to structural components.

As typically applications there could be mentioned:
- Automotive door side intrusion beams;
- Automotive front end panels;
- Automotive bumper beams;
- Automotive dashboards and knee bolsters;
- Automotive rear seat reinforcements;
- Road-side impact restraints (Armco barriers).

## Claims

1. Reinforcing profile, characterised in, that the reinforcing profile has been manufactured from a beam made from fibre reinforced plastic and a woven belt extending in the longitudinal direction of said beam and being combined with said beam.

2. Reinforcing profile according claim 1, characterised in, that said beam has been combined with at least two belts extending substantially parallel to each other.

3. Reinforcing profile according claim 1 or 2, characterised in, that the belt(s) has been embedded in the reinforced plastic of the beam.

4. Reinforcing profile according any of the preceding claims, characterised in, that the beam has been manufactured from high modulus fibre reinforced plastic.

5. Reinforcing profile according any of the preceding claims, characterised in, that the beam has been manufactured from polybutylene resin combined with unidirectional glass fibres.

6. Reinforcing profile according any one of claims 1 - 5, characterised in that the beam has been manufactured from polypropylene thereph- talate.

7. Reinforcing profile according claim 5 or 6, characterised in that the beam comprises 30-50% glass fibres by volume.

8. Reinforcing profile according any of the preceding claims, characterised in, that the woven belt is a thermoplastic woven fibre belt.

9. Reinforcing profile according any of the preceding claims, characterised in, that the woven belt is formed by belt material used for car seat belts.

10. Method for manufacturing a reinforcing profile according any of the preceding claims, characterised in, that at least one belt is sandwiched between preheated resin layers and the combination of belt(s) and resin layers is formed in the reinforcing profile by using compression moulding technique.

11. Car provided with a reinforcing profile according any of the preceding claim 1 - 10.
